# EUROPÄISCHE PATENTANMELDUNG

(11) **EP 1 061 297 A2**
(43) Veröffentlichungstag der Anmeldung: **20.12.2000**
(21) Anmeldenummer: 00111458.6
(22) Anmeldetag: 27.05.2000
(51) Int. Cl.: F16J 15/34

(54) **Dichtungsanordnung**

(30) Priorität: 19.06.1999 DE 19928141
(71) Anmelder: KSB Aktiengesellschaft, 67227 Frankenthal (DE)
(72) Erfinder: Riel, Axel, 67227 Frankenthal (DE)

(57) **Zusammenfassung**

Die Erfindung betrifft eine Dichtungsanordnung, bei der ein Rotationsteil (5) durch ein Bauteil (4) hindurchgeführt ist und das Bauteil (4) mindestens einen Dichtungsraum (3) zur Aufnahme von einer oder mehreren Gleitringdichtungen (1) aufweist. Im Dichtungsraum ist ein Dichtungshalter (6) zur Abstützung eines nicht rotierenden Gegenringes (15) einer Gleitringdichtung angeordnet, wobei der Dichtungshalter (6) als Teil der Wandfläche des Dichtungsraumes (3) ausgebildet ist und der Gegenring (15) am Dichtungshalter (6) anliegt. Der Dichtungshalter (6) kann den Dichtungsraum (3) zu einer Atmosphärenseite und/oder zu einer Produktseite stirnseitig verschließen oder bei einer Anordnung als Zwischenwand auch unterteilen. Dabei liegt der Dichtungshalter (6) mit einer radial vorstehenden Ringfläche (8) an einer Stirnseite des Dichtungsraumes (3) an und ist durch Befestigungsmittel in seiner Einbauposition gehalten.

## Beschreibung

Die Erfindung betrifft eine Dichtungsanordnung, bei der ein Rotationsteil durch ein Bauteil hindurchgeführt ist, das Bauteil mindestens einen Dichtungsraum zur Aufnahme von einer oder mehreren Gleitringdichtungen aufweist, im Dichtungsraum ein Dichtungshalter zur Abstützung eines nicht rotierenden Gegenringes einer Gleitringdichtung ausgebildet ist und der Dichtungshalter als Teil der Wandfläche des Dichtungsraumes ausgebildet ist.

Gleitringdichtungen sind auch als standardisierte Bauteile ausgelegt und werden in verschiedenen Abmessungen für unterschiedliche Anwendungsfälle von darauf spezialisierten Herstellern geliefert. Ein Nutzer von Gleitringdichtungen muß bei einer Konstruktion dafür Sorge tragen, daß der jeweils abzudichtende Gehäusebereich eine Dimensionierung aufweist, die den Einbau einer vorher ausgewählten Gleitringdichtung eines Herstellers zuläßt.

Gleitringdichtungen bestehen in ihrem Aufbau aus einem mit einer Welle rotierenden Gleitring und einem im Gehäuse stillstehenden Gegenring, wobei diese beiden Ringelemente mit ihren Dichtungsflächen aufeinander gleiten. Da für die aneinanderliegenden Gleitflächen hochwertige Werkstoffe Verwendung finden, werden Gleitring und Gegenring mehrteilig aufgebaut.

Zur Halterung einer Gleitringdichtung sind die verschiedensten Lösungen bekannt. Durch die US-A 4 819 950 ist es bekannt, in einem Dichtungsraum eine Gleitringdichtung anzuordnen, wobei deren rotierender Ringteil in einem Halter befestigt ist, der drehmomentübertragend mit einer mit der Welle rotierenden Wellenschutzhülse verbunden ist. Der ortsfeste Ringteil ist dagegen in einem Einsatz gelagert, der unter der Wirkung einer Feder im Dichtungsraum längsverschieblich angeordnet und von einem äußeren Flansch des Gehäuses gehalten ist. Dieser Flansch, der den stationären Teil der Gleitringdichtung gegen Verdrehung sichert, muß auf die jeweilige Gleitringdichtung genau abgestimmt sein. Sollen beispielsweise bei einer Maschine innerhalb eines Dichtungsgehäuses verschiedene Baugrößen von Wellen Verwendung finden, so müssen dementsprechend viele Flanschteile Anwendung finden, mit deren Hilfe die entsprechende Vielzahl von unterschiedlich großen Gleitringdichtungen an die verschiedenen Wellendurchmesser angepaßt werden können.

Durch die DE-A 35 07 819 ist eine Gleitringsdichtunganordnung bekannt, bei der das Gehäuse des Dichtungsraumes durch ein Flanschelement verschlossen ist, welches infolge seiner Formgebung den Einbau verschiedener Gleitringdichtungsbauformen zuläßt. Dieser Flanschteil läßt aufgrund seiner speziellen Formgebung sowohl zu einer als auch zu beiden Seiten die Anordnung von Gleitringdichtungen oder einer Drossel zu. Für den Einsatz in Gehäusen mit unterschiedlichen Wellendurchmessern, muß der mit aufwendigen Bohrungen sowie Ausnehmungen versehene Flanschteil in entsprechender Anzahl bevorratet werden. Der Flanschteil selbst ist ein sehr aufwendig zu fertigendes und daher teures Bauteil.

Und durch die US-A 4 332 391 ist ein einen Dichtungsraum verschließendes Flanschteil bekannt, welches aufgrund unterschiedlicher Abstufungen im Bereich seines Innendurchmessers sowie durch die Vorbereitung für eine seitenverkehrte Montage als Widerlager für unterschiedliche Gleitringdichtungsbauformen dient. Diese Lösung ist nur zum äußeren Abschluß eines Dichtungsraumes einsetzbar.

Und die DE-C 42 29 081 zeigt eine gattungsgemäße Dichtungsanordnung, bei der in einem Bauteil innerhalb eines Dichtungsraumes ein Dichtungshalter angeordnet ist, an dem sich ein nicht rotierender Gegenring einer Gleitringdichtung abstützt. Der Dichtungshalter weist eine Kammer auf, in der der stationäre oder nicht rotierende Gegenring axial verschieblich und dichtend angeordnet ist. Ein solcher Dichtungshalter kann nur mit einer speziell darauf abgestimmten Gleitringdichtung funktionell zusammenwirken.

Für Maschinen jedoch, bei denen sowohl unterschiedliche Gleitringdichtungsbauarten als auch verschiedene Gehäusebauformen für den Dichtungsraum wünschenswert sind, ist diese Lösung nicht geeignet.

Der Erfindung liegt das Problem zugrunde, für Maschinen, bei denen unterschiedliche Dichtungssysteme mit gleichen Nenndurchmessern in verschiedener Dichtungsanordnung Verwendung finden - beispielsweise bei Kreiselpumpen zur Förderung verschiedenster Medien - eine vielseitig verwendbare und wenig Bauteile erfordernde Konstruktion einer Dichtungsanordnung zu entwickeln.

Die Lösung dieses Problems sieht vor, daß der Dichtungshalter als ein den Dichtungsraum stirnseitig verschließendes und/oder innen unterteilendes Wandteil ausgebildet ist und daß der Dichtungshalter mit einer radial vorstehenden Ringfläche an einer Stirnseite des Dichtungsraumes anliegt. Mit Hilfe eines solchen Dichtungshalters ist es möglich, ein beliebiges Austauschen universell ausgebildeter Dichtungssysteme untereinander mit geringster Anzahl von Teilen an einer mit Gleitringdichtungen ausgerüsteten Maschine zu erreichen. Der Dichtungshalter erlaubt durch seine Ringfläche eine wahlweise Anordnung auf der Seite des Innen- oder Außendruckes eines Dichtungsraumes. Damit ermöglicht er unterschiedliche Einbaulagen von Gleitringdichtungen und schafft in einfacher Weise die Voraussetzung für einen variabel gestalteten Dichtungsraum zur Aufnahme von Gleitringdichtungen. Ebenso kann der Dichtungshalter bei entsprechendem Aufbau des Dichtungsraumes diesen in mehrere Innenräume unterteilen.

Ausgestaltungen sehen hierzu vor, daß ein ringförmiges Gehäuseteil den Dichtungsraum in axialer Richtung verlängert, in das ringförmige Gehäuseteil stirnseitig ein Dichtungshalter integriert sein kann oder daß der Dichtungshalter den Dichtungsraum auf der Produktseite, welche dem abzusperrenden Innendruck entspricht und mit einem Fluid gefüllt ist, stirnseitig verschließt. Mittels dieser Merkmale wird bei geringer Teileanzahl die Kombinationsmöglichkeit für den Einbau verschiedener Dichtungen in einfacher Weise erheblich vergrößert. Denn mit den weiteren Ausgestaltungen, wonach der Dichtungshalter zwischen dem Bauteil und dem ringförmigen Gehäuseteil dichtend angeordnet ist oder wonach der Dichtungshalter als Trennwand zwischen einem ersten und einem zweiten Dichtungsraum angeordnet ist, ermöglicht der Dichtungshalter die Bildung von zwei Dichtungsräumen, wodurch andere Dichtungsanordnungen möglich werden.

Durch die radial nach außen abstehende Fläche kann der Dichtungshalter an verschiedenen Orten außerhalb und innerhalb des Dichtungsraumes gehalten werden. Er kann sowohl als eine Begrenzung des Dichtungsraumes zwischen der abzusperrenden Produktseite und dem Dichtungsraum, als auch auf der Atmosphärenseite angeordnet werden. Letzteres ist der Fall, wenn der Dichtungsraum zur Produktseite hin offen ausgebildet ist. Des Weiteren ist es möglich, bei einem durch mindestens zwei Gehäuseteile gebildeten Dichtungsraum diesen Dichtungshalter zwischen den beiden Bauteilen anzuordnen und somit im Dichtungsraum eine Zwischenwand zu bilden, wodurch in einfachster Weise die Möglichkeit zur Bildung einer Tandemanordnung von Gleitringdichtungen geschaffen wird.

Weitere Ausgestaltungen sind in den Unteransprüchen beschriebenen.

Ausführungsbeispiele der Erfindung sind in den Zeichnungen dargestellt und werden im folgenden näher beschrieben. Es zeigen die
- Fig. 1: einen äußeren Abschluß eines Dichtungsraumes,
- Fig. 2: einen mehrteilig aufgebauten Dichtungsraum mit Zwischenwand und
- Fig. 3: einen inneren Abschluß eines Dichtungsraumes.

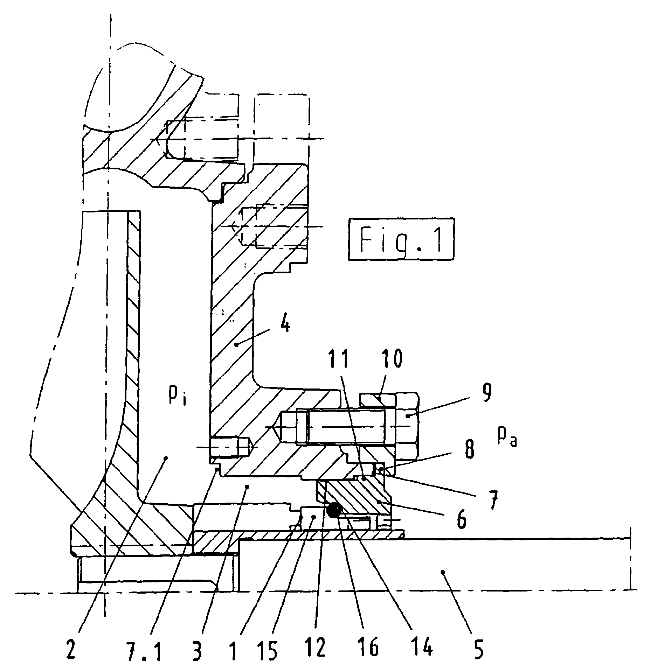

Die Fig. 1 zeigt eine Dichtungsanordnung, bei der eine Gleitringdichtung 1 in einem zu einem Gehäuseinnenraum 2 hin offen ausgebildeten Dichtungsraum 3 angeordnet ist. Der Dichtungsraum 3 befindet sich in einem Bauteil 4, mit dem ein Fluid von einer umgebenden Atmosphäre abgeschirmt wird. Das Bauteil 4 durchdringt eine Welle 5, mit deren Hilfe innerhalb des Gehäuseinnenraumes 2 notwendige Funktionen ausgeführt werden. In diesem Beispiel treibt die Welle 5 ein Pumpenlaufrad an, mit dem ein Fluid umgewälzt wird.

In dem Innenraum 2 des Bauteiles 4 symbolisiert das Zeichen pᵢ einen Innendruck eines Fluids. Und mit dem einen Außendruck symbolisierenden Zeichen pₐ ist die Außen- oder Atmosphärenseite des Bauteiles 4 gekennzeichnet. Das Bauteil 4 kann die unterschiedlichsten Formen eines Gehäuses aufweisen und ist in diesem Ausführungsbeispiel als ein Deckelteil gezeichnet, der als Verschluß eines Pumpengehäuses dient.

In den Dichtungsraum 3 des Bauteiles 4 ist von außen ein Dichtungshalter 6 eingeschoben, der an der äußeren Stirnseite 7 des Dichtungsraumes 3 mit einer radial vorstehenden Ringfläche 8 dichtend anliegt. Der Dichtungshalter 6 kann auf verschiedene Arten mit dem Bauteil 4 verbunden sein. In diesem Ausführungsbeispiel ist eine Klemmverbindung gezeigt, bei der Befestigungsmittel 9 in Form von Schraubmitteln einen Ring 10 gegen die Ringfläche 8 pressen. Dabei wird die radial vorstehende Ringfläche 8 zwischen Gehäusestirnseite 7 und Ring 10 unter Zwischenlage von Dichtmitteln dichtend eingeklemmt.

Um eine gute Zentrierung für eine im Dichtungsraum 3 angeordnete Gleitringdichtung 1 zu erhalten, ist der Dichtungshalter 6 an einer Wandfläche des Dichtungsraumes mit einer Paßfläche 11 geführt. Eine weitere am Dichtungshalter 6 angeordnete Paßfläche 12 ermöglicht dessen Montage an der anderen Stirnseite 7.1 bzw. an anderen Orten des Dichtungsraumes.

Auf der zum Dichtungsraum 3 weisenden Seite ist am Dichtungshalter im Bereich seines Innnendurchmessers eine Anlagefläche 14 für den stillstehenden Gegenring 15 der Gleitringdichtung 1 angeordnet. An dieser Anlagefläche 14 liegt der Gegenring 15 mit einem Dichtungsring 16 dichtend bzw. verdrehgesichert an. Die Verdrehsicherung des Gegenringes 15 kann auch durch andere bekannte Mittel erfolgen.

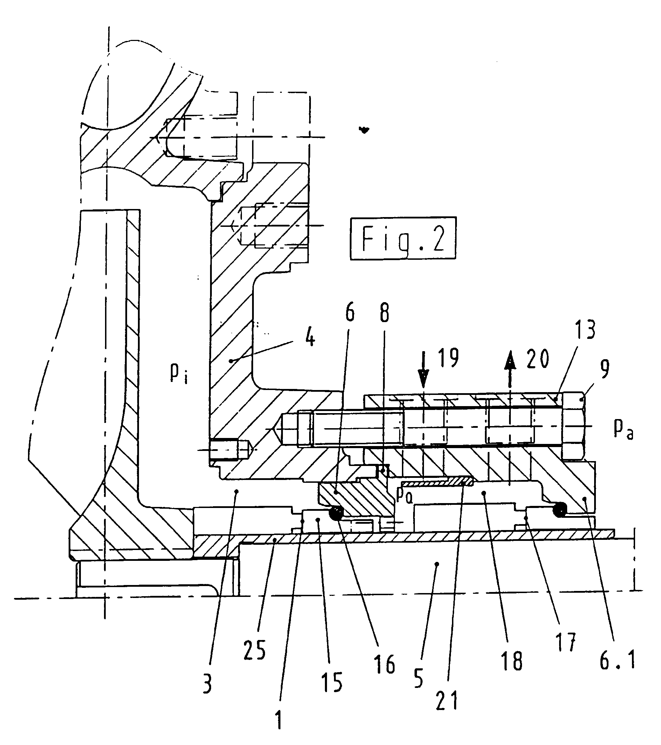

Die Fig. 2 zeigt eine Ausführungsform, bei der das Gehäuse des Dichtungsraumes zweiteilig ausgebildet ist, wobei der Dichtungsraum 3 durch ein ringförmiges Gehäuseteil 13 zur Atmosphärenseite hin axial verlängert worden ist und in diesem Ausführungsbeispiel den Ring 10 der Fig. 1 ersetzt. Damit ist die Möglichkeit gegeben, an einer solchen Dichtungsanordnung auch Gleitringdichtungen 1, 17 in Tandemanordnung einzusetzen. Solche hintereinander angeordneten Gleitringdichtungen 1, 17 finden häufig bei abzusperrenden Fluiden Verwendung, die bei einem möglichen Austritt aus einer Maschine mit der umgebenden Atmosphäre kritisch reagieren können. Dabei kann es sich um eine Geruchsbelästigung handeln, oder es können Auskristallisationen oder sonstige nachteilige Wirkungen auftreten. Eine solche Doppeldichtung wird hauptsächlich aus Sicherheitsgründen verwendet.

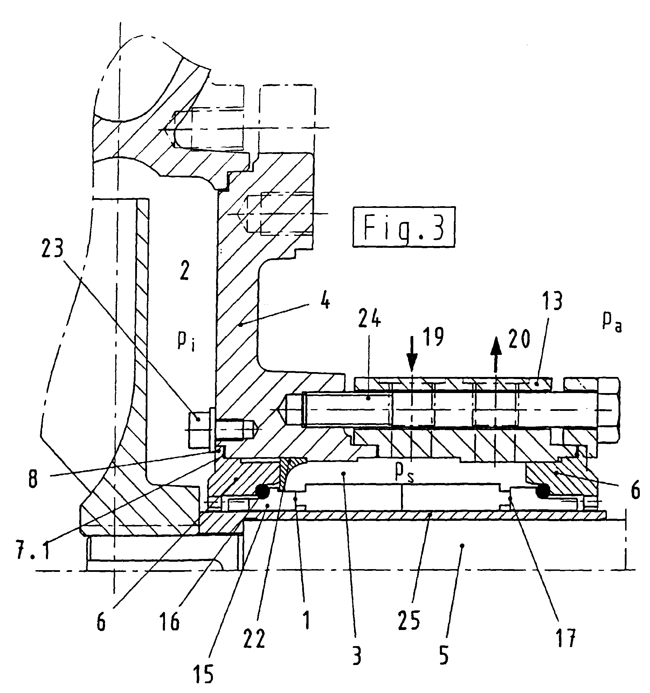

Das ringförmiges Gehäuseteil 13 bildet einen zusätzlichen Dichtungsraum 18 für den Einbau der zweiten Gleitringdichtung 17, wobei der Dichtungshalter 6 eine Zwischenwand zwischen den Dichtungsräumen 3, 18 bildet. In diesem Ausführungsbeispiel ist ein Dichtungshalter 6.1 der zweiten Gleitringdichtung 17 als integraler Bestandteil des ringförmigen Gehäuseteiles 13 ausgebildet. Der Dichtungshalter 6.1 dient als Widerlager für den stillstehenden Gegenring der zweiten Gleitringdichtung 17. Das ringförmige Gehäuseteil 13 kann aber auch mit einer entsprechenden Anlagefläche für die Anlage eines zweiten Dichtungshalters 6 versehen sein. Dies ist in Fig. 3 gezeigt.

Der Dichtungshalter 6 ist mit seiner radial vorstehenden Fläche 8 zwischen dem ringförmigen Gehäuseteil 13 und dem den ersten Dichtungsraum 3 enthaltenden Bauteil 1 durch die Befestigungsmittel 9 eingeklemmt. Somit weist diese Dichtungsanordnung einen ersten Dichtungsraum 3 auf, in dem eine direkt im abzusperrenden Fluid befindliche Gleitringdichtung 1 angeordnet ist. Zwischen Dichtungshalter 6 und dem ringförmigen Gehäuseteil 13 ist im zweiten Dichtungsraum 18 die zweite Gleitringdichtung 17 angeordnet, die von außen mit Schmier- und/oder Kühlmittel versorgt wird. Das ringförmige Gehäuseteil 13 kann hierbei zusätzlich über die durch Pfeile gekennzeichneten, gestrichelt gezeichneten "Quench-Anschlüsse" verfügen, mittels derer in dem zweiten Dichtungsraum 18 durch die Anschlüsse 19, 20 ein neutrales Fluid zirkulieren kann.

Der Druck p_{Q} in einem solchen Quench ist gleich oder kleiner dem abzusperrenden Druck pᵢ des abzusperrenden Fluid. Somit tritt bei einer eventuellen Undichtigkeit der ersten Gleitringdichtung 1 eine Leckage in den zweiten Dichtungsraum 18 ein und wird durch die dort befindliche Flüssigkeit neutralisiert oder angezeigt. Der Betreiber einer solchen Dichtungsanordnung kann bei einer eventuellen Leckage der ersten Gleitringdichtung 1 aufgrund der als Sicherheit dienenden zweiten Gleitringdichtung 17 einen Dichtungsaustausch planen. Das in dem zweiten Dichtungsraum 18 befindliche Fluid kann aufgrund des Dichtringes 16, der zwischen Dichtungshalter 6 und dem stationären Gegenring 15 der ersten Gleitringdichtung 1 angeordnet ist, nicht in den Innenraum überströmen. Dieses Fluid umspült ständig die zweite Gleitringdichtung 17 und wirkt dabei kühlend und schmierend auf deren Gleitflächen ein. Ein Einsatz 21 dient hier der Strömungsführung des Quenchfluid innerhalb des zweiten Dichtungsraumes 18.

In der Fig. 3 schließt der Dichtungshalter 6 den Dichtungsraum 3 zum Innenraum 2 hin in axialer Richtung ab. In Verbindung mit dem hier zweiteilig aufgebauten Dichtungsgehäuse wird somit in axialer Richtung ein sehr langer Dichtungsraum 3 geschaffen, der eine "Back to back" - Anordnung von zwei Gleitringdichtungen 1, 17 ermöglicht. Durch das ringförmige Gehäuseteil 13 zirkuliert in dem mit zwei Gleitringdichtungen 1, 17 ausgestatteten verlängerten Dichtungsraum 3 eine von außen über die Anschlüsse 19, 20 eingespeiste Sperrflüssigkeit mit dem Druck p_{S}.

Eine solche Bauart einer Doppeldichtung findet dann Verwendung, wenn auf der Produktseite ein stark abrasives, gasförmiges, toxisches oder brennbares Fluid befindlich ist und besonders sicher gegenüber der Atmosphäre abgedichtet werden muß. Mit Hilfe einer für das jeweils abzusperrende Produkt geeigneten Sperrflüssigkeit wird bei einer eventuellen Leckage der Gleitringdichtung 1 die notwendige Sicherheit gewährleistet. Die Sperrflüssigkeit steht dabei unter einem Druck p_{S}, der größer als der Druck pᵢ des abzusperrenden Fluids ist. Somit wird bei einer eventuellen Leckage der ersten, produktseitig angeordneten Gleitringdichtung 1 ein Überströmen der Sperrflüssigkeit in den Innenraum 2 mit dem Druck pᵢ erreicht. Ein solcher Druckabfall in dem Sperrflüssigkeitskreislauf ist ein Signal für einen Dichtungsschaden.

Ein im verlängerten Dichtungsraum 3 zusätzlich angeordnetes Lagesicherungselement 22 verhindert ein Abheben des stationären Gegenringes 15 der ersten Gleitringdichtung 1 vom Dichtungsring 16, wenn aufgrund von Druckschwankungen der Druck pᵢ in unzulässiger Weise den Sperrdruck p_{S} übersteigen sollte.

Der Dichtungshalter 6 liegt bei diesem Ausführungsbeispiel mit seiner radial vorstehenden Ringfläche 8 an einem Absatz des Bauteiles 4 und an der produktseitigen Stirnseite 7.1 des Dichtungsraumes 3 an. Er kann dort durch bekannte Befestigungsmittel in seiner Position gehalten werden, wobei dies hier durch ein oder mehrere Schraubelemente 23 erfolgt. Schraubelemente 9, die Bohrungen 24 des ringförmigen Gehäuseteiles 13 durchdringen und in dem Bauteil 4 gehalten sind, bewirken den Zusammenhalt der Teile der Dichtungsräume bzw. des Dichtungsraumes von Fig. 2 und Fig. 3.

Der universelle Dichtungshalter ermöglicht ein beliebiges Austauschen der verschiedenen Anordnungen von Gleitringdichtungen mit einer geringsten Anzahl von Teilen und auch untereinander. Der Dichtungshalter ist universell einsetzbar bei unterschiedlichen Dichtungssystemen gleicher Nenndurchmesser. Bei einer Tandem- oder Back to Back- Anordnung ist ein gleicher Dichtungshalter 6 und eine gleiche Wellenhülse 25, vgl. Fig. 3, verwendbar. Bei den in den Figuren 1 - 3 gezeigten drei verschiedenen Ausführungsformen ist an einem Bauteil 4 ein gleicher Dichtungsraum, ein gleicher Dichtungshalter 6 und eine gleiche Welle 5 einsetzbar. Eine Wellenhülse 25 kann auch integraler Bestandteil der Welle 5 sein.

Die mit der radial vorstehenden Ringfläche 8 zusammenwirkenden Anlageflächen des Bauteiles 4 und des ringförmigen Gehäuseteiles 13 sind hierbei so bemessen, daß sie unter Zwischenschaltung üblicher Dichtungselemente den Einbau der in ihrer Baulänge genormten Gleitringdichtungen problemlos ermöglichen.

## Patentansprüche

1. Dichtungsanordnung, bei der ein Rotationsteil (5) durch ein Bauteil (1) hindurchgeführt ist, das Bauteil (1) mindestens einen Dichtungsraum (3) zur Aufnahme von einer oder mehreren Gleitringdichtungen (1) aufweist, im Dichtungsraum (3) ein Dichtungshalter (6) zur Abstützung eines nicht rotierenden Gegenringes (15) einer Gleitringdichtung (1) angeordnet ist und der Dichtungshalter (6) als Teil der Wandfläche des Dichtungsraumes (3) ausgebildet ist, **dadurch gekennzeichnet,** daß der Dichtungshalter (6) als ein den Dichtungsraum (3, 18) stirnseitig verschließendes und/oder innen unterteilendes Wandteil ausgebildet ist und daß der Dichtungshalter (6) mit einer radial vorstehenden Ringfläche (8) an einer Stirnseite (7, 7.1) des Dichtungsraumes (3, 18) anliegt.

2. Dichtungsanordnung nach Anspruch 1, dadurch gekennzeichnet, daß ein ringförmiges Gehäuseteil (13) den Dichtungsraum (3) axial verlängert.

3. Dichtungsanordnung nach Anspruch 2, dadurch gekennzeichnet, daß in das ringförmige Gehäuseteil (13) stirnseitig ein Dichtungshalter (6.1) integriert ist.

4. Dichtungsanordnung nach Anspruch 1, 2 oder 3, dadurch gekennzeichnet, daß der Dichtungshalter (6) den Dichtungsraum (3) auf der Produktseite stirnseitig verschließt.

5. Dichtungsanordnung nach Anspruch 2, 3 oder 4, dadurch gekennzeichnet, daß der Dichtungshalter (6) zwischen dem Bauteil (1) und dem ringförmigen Gehäuseteil (13) dichtend angeordnet ist.

6. Dichtungsanordnung nach einem der Ansprüche 1 bis 5, dadurch gekennzeichnet, daß der Dichtungshalter (6) als Trennwand zwischen einem ersten und einem zweiten Dichtungsraum (3, 18) angeordnet ist.

7. Dichtungsanordnung nach einem der Ansprüche 1 bis 6, dadurch gekennzeichnet, daß der Dichtungshalter (6) abgestufte Außendurchmesser mit mindestens zwei Paßflächen (11, 12) mit unterschiedlichen Außendurchmessern aufweist.

8. Dichtungsanordnung nach einem der Ansprüche 1 bis 7, dadurch gekennzeichnet, daß der Dichtungshalter (6) mit einer im Bereich seines Innendurchmessers angeordneten Anlagefläche (14) für den Gegenring (15) einer Gleitringdichtung (1, 17) versehen ist.

9. Dichtungsanordnung nach Anspruch 8, dadurch gekennzeichnet, daß der Gegenring (15) einer Gleitringdichtung (1, 17) mit einem Dichtungsring (16) am Dichtungshalter (6, 6.1) dichtend und verdrehsichernd anliegt.

10. Dichtungsanordnung nach einem der Ansprüche 1 bis 9, dadurch gekennzeichnet, daß auf den Gegenring (15) einwirkende Lagesicherungselemente (22) am Dichtungshalter (6) anliegen.

11. Dichtungsanordnung nach einem der Ansprüche 1 bis 10, dadurch gekennzeichnet, daß Befestigungsmittel (9, 23) die Ringfläche (8) und/oder das ringförmige Gehäuseteil (13) in ihrer Einbauposition halten.
